# EUROPÄISCHE PATENTANMELDUNG

(11) **EP 1 154 625 A2**
(43) Veröffentlichungstag der Anmeldung: **14.11.2001**
(21) Anmeldenummer: 01111441.0
(22) Anmeldetag: 10.05.2001
(51) Int. Cl.: H04M 3/493

(54) **Anpassung eines Sprachantwortsystems an Anrufer und/oder Störungen**

(30) Priorität: 10.05.2000 DE 10022700
(71) Anmelder: Sympalog Speech Technologies AG, 91052 Erlangen (DE)
(72) Erfinder: Gallwitz, Florian, 91052 Erlangen (DE); Nöth, Elmar, Dr., 91052 Erlangen (DE); Warnke, Volker, 91056 Erlangen (DE)
(74) Vertreter: Becker Kurig Straus

(57) **Zusammenfassung**

Verfahren zum Anpassen und Steuern eines Dialogsystems sowie Dialogsystem. Erläutert wird zum einenunter anderem ein Verfahren zum Anpassen eines Dialogsystems (10), bei dem für verschiedene Endgeräte (14, 16) jeweils mindestens ein Datensatz gespeichert wird, der bei der Übertragung von Sprachsignalen zu erwartende Sprachdaten oder aus diesen Sprachdaten abgeleitete Parameter oder andere Daten enthält. Die gespeicherten Sprachdaten werden zur Anpassung des Dialogsystem z.B. an eine geographische Position genutzt. Durch das Speichern der Parameter ist auch bei telefonisch erreichbaren Dialogsystemen eine sehr schnelle und einfache Anpassung des Dialogsystems an einen Teilnehmer möglich.

## Beschreibung

Die Erfindung betrifft ein Verfahren zum Steuern eines Dialogsystems und zum vorausgehenden Anpassen eines Dialogsystems an Umstände, welche geeignet sind, die Erkennungsrate einer Spracherkennungseinheit des Dialogsystems zu beeinflussen und/oder den Dialog auf die Bedürfnisse des Anrufers abzustimmen.

Solche Umstände sind unter anderem:
- die Stimmlage und Sprechweise bzw. Dialekt eines Sprechers,
- die Übertragungscharakteristik des verwendeten Mikrofons,
- die Art von Hintergrundgeräuschen während des Dialogs,
- die Übertragungseigenschaften der Übertragungsstrecke
- zwischen dem Nutzer des Dialogsystems und dem Dialogsystem,
- die geographische Herkunft bzw. Identität des Sprechers.

Ein Dialogsystem ist ein automatisches System, das in einem Telekommunikationsnetzwerk über Sprache mit einem Benutzer kommuniziert. Die Benutzereingaben können dabei alternativ zu der sprachlichen Eingabe auch über die Tasten des Telekommunikationsendgerätes erfolgen (z.B. DTMF). Typische Anwendungen für solche Systeme sind Informations-, Auskunfts-, Bestell- oder Telefon-Banking-Systeme. Einfache Systeme erlauben dem Benutzer die Navigation in einer baumartig organisierten Menüstruktur, komplexere Systeme wie das EVAR-System (vgl. Gallwitz, F.; Niemann, H.; Nöth, E. und andere: "The Erlangen Spoken Dialogue System EVAR: State Of The Art Information Retrieval System, In Proceedings of 1998 International Symposium on Spoken Dialogue (ISSD 98), Sydney, Australia, 1998, Seiten 19 bis 26") erlauben dem Benutzer auch die Eingabe von ganzen Sätzen und eine natürlichsprachliche Interaktion.

Ein Beispiel für ein telefonisch erreichbares Dialogsystem ist das Dialogsystem "FränKi - Das Fränkische Kinoinformationssystem" der Anmelderin. Dieses Dialogsystem ist unter der Rufnummer 0911-5273802 erreichbar. Das Dialogsystem läßt sich auch über Telefondienste erreichen, die im Internet angeboten werden.
Nähere Informationen sind im Internet unter der Adresse "www.sympalog.de" zu finden. Das Dialogsystem Fränki ist auch Thema zahlreicher Veröffentlichungen, von denen insbesondere auf die Veröffentlichung von Gallwitz, F.; Niemann, H.; Nöth, E. und andere: "The Erlangen Spoken Dialogue System EVAR: State Of The Art Information Retrieval System, In Proceedings of 1998 International Symposium on Spoken Dialogue (ISSD 98), Sydney, Australia, 1998, Seiten 19 bis 26" hingewiesen wird.

Herkömmliche Dialogsysteme starten bei jedem Anruf von einem initialen Dialogzustand, in dem keine Informationen über den Aufenthaltsort des Anrufers vorhanden sind. Informationen, die den Aufenthaltsort des Anrufers betreffen, werden ggf. im Laufe eines Dialoges gesammelt (z.B. "Wo möchten Sie ins Kino gehen?"), oder in Folge einer expliziten Identifizierung des Anrufers in das Dialogsystem eingespeist.

Aus der EP 920 173 A2 ist bereits eine Adaption an die akustischen Gegebenheiten für die Zwecke der Spracherkennung, Sprechererkennung, Topic/Word-Spotting und Sprachen-Identifikation auf Basis der Rufnummer bekannt, nicht jedoch die Anpassung des Dialogablaufs an Parameter, wie den Aufenthaltsort des Benutzers.
Aus der US 58 95 447 A ist lediglich eine Spracherkennung bekannt.
Aus der WO 95/20859 A1 ist ebenfalls nur ein Bezug auf die Sprache des Benutzers, nicht jedoch auf seinen Aufenthaltsort ableitbar.
Aus der EP 953 968 A2 ist ein Verfahren zur Sprecheradaption des Spracherkenners bekannt.

Ferner sind aus der Literatur zahlreiche Verfahren zur Anpassung eines Spracherkennungssystems an den Übertragungskanal und an den Sprecher bekannt, z.B. auf der Ebene der Extraktion von Merkmalen aus dem Sprachsignal. Verfahren zur Kanaladaption und zur Vokaltraktnormierung sowie auf der Ebene der Laut- und Wortmodelle statistische Schätzverfahren zur Adaption der akustischen Parameter sind bekannt. Insbesondere werden Diktiersysteme in einer Lernphase an den Sprecher angepaßt. Solche Verfahren sind jedoch bei telefonischen Sprachdialogsystemen nur begrenzt einsetzbar. Anders als bei einem Diktiersystem muß die Anpassung bei einem Dialogsystem innerhalb weniger Sekunden erfolgen, ohne daß eine mehrere Minuten dauernde Lernphase dem Dialog vorangeht.

Die vorliegende Erfindung bezweckt die Verbesserung von Dialogsystemen durch Berücksichtigung von bereits vor oder zu Beginn des Dialogs verfügbaren Merkmalen bzw. Umständen des Anrufers bzw. Benutzers.

Es ist somit Aufgabe der Erfindung, ein verbessertes Verfahren zum Steuern eines Dialogsystems anzugeben, mit dem eine weitestmögliche vorausgehende Anpassung an den Benutzerzustand erzielt wird. Außerdem soll ein Dialogsystem angegeben werden, das das erfindungsgemäße Verfahren ausführt.

Die das Verfahren betreffende Aufgabe wird beim Ausführen der im Patentanspruch 1 bzw. 2 angegebenen Verfahrensschritte gelöst. Weiterbildungen des erfindungsgemäßen Verfahrens sind in den Unteransprüchen angegeben.

Die Erfindung geht von der Überlegung aus, daß das Dialogsystem zwar von sehr vielen Endgeräten aus genutzt wird, daß jedoch der Kreis der Anrufer von einem bestimmten Endgerät aus häufig sehr klein ist. So werden beispielsweise Mobiltelefone meist nur von einer einzigen Person genutzt. Weiterhin beruht die Erfindung auf der Überlegung, daß ein an einer Verbindung beteiligtes Endgerät in einer bestimmten geographischen Region die vom Benutzer gewünschten Optionen einschränkt.

Deshalb wird bei einem ersten Aspekt des erfindungsgemäßen Verfahrens für verschiedene Endgeräte bzw. Gruppen von Endgeräten eines Telekommunikationsnetzes jeweils mindestens ein Datensatz gespeichert, der mindestens eine Angabe über die zu erwartende bzw. frühere Nutzung des Dialogsystems enthält. Wird eine Verbindung zwischen einem Endgerät und dem Dialogsystem aufgebaut, so wird das an der Verbindung beteiligte Endgerät bzw. die das beteiligte Endgerät enthaltende Gruppe ermittelt. Der für das ermittelte Endgerät bzw. für die ermittelte Gruppe gespeicherte Datensatz wird zur Steuerung des Dialogs zwischen dem das Endgerät nutzenden Teilnehmer und dem Dialogsystem genutzt.

Durch diese Maßnahmen wird erreicht, daß alternativ oder zusätzlich zu Steuerungsanweisungen der am Dialog beteiligten Person der Dialog automatisch gesteuert werden kann. Die Zahl der vom Dialogpartner geforderten Angaben verringert sich dadurch in der Regel erheblich, so daß die benötigte Information schnell erhältlich ist. Fehlfunktionen lassen sich durch den Einsatz bekannter Verfahren zur Identifizierung vermeiden, beispielsweise an Hand der Stimme des Dialogpartners oder mit Hilfe eines Benutzerkennzeichens. Eingesetzt wird das Verfahren gemäß erstem Aspekt unter anderem bei Auskunftssystemen und bei Telefon-Banking-Systemen.

Bei einer Weiterbildung des Verfahrens werden die Angaben über die zu erwartende Nutzung aus der Auswertung mindestens einer früheren Nutzung des Dialogsystems bei einer Verbindung mit dem selben Endgerät gewonnen. Diesem Vorgehen liegt die Erkenntnis zugrunde, daß die Nutzung des Dialogsystems durch dieselbe Person in der Regel auf ähnliche Art erfolgt, weil diese Person ihre Verhaltensweisen und ihr Informationsbedürfnis beibehält. Beispielsweise werden von einer Person nur Überweisungen mit Hilfe eines Telefon-Banking-Systems ausgeführt und diese Überweisungen gehen auch nur an einen kleinen Personenkreis von Geschäftspartnern. Der früher genutzte Dienst sowie Angaben für Überweisungsformulare werden im Datensatz gespeichert.

Bei einer nächsten Weiterbildung wird das Dialogsystem abhängig von den Angaben über die zu erwartende Nutzung so gesteuert, daß es eine Auswahlmöglichkeit von selbst vorschlägt, die von dem Endgerät bereits früher ausgewählt worden ist, z.B. wird die Bedienperson, die bisher nur Überweisungen mit Hilfe des Telefon-Banking-Systems ausgeführt hat, nicht mehr gefragt, ob sie ihren Kontostand erfahren möchte, weil davon ausgegangen werden kann, daß sie den Kontostand auf andere Art erfährt. Das Dialogsystem schlägt sofort vor, mit Überweisungen zu beginnen. Die automatische Einschränkung von Auswahlmöglichkeiten bis hin zum Vorschlag einer Auswahlmöglichkeit oder mehrerer ausgewählter Auswahlmöglichkeiten führen zu einem kürzeren Dialog. Die Bedienbarkeit des Dialogsystems wird erleichtert und die während des Dialogs entstehenden Gebühren werden gesenkt.

Gemäß dem ersten Aspekt der Erfindung wird beim erfindungsgemäßen Verfahren für verschiedene Endgeräte bzw. für Gruppen von Endgeräten eines Telekommunikationsnetzes jeweils mindestens ein Datensatz gespeichert, der eine Angabe über eine frühere Nutzung des Dialogsystems enthält. Für alle eingehenden Anrufe, zu denen ein Endgerät ermittelt werden konnte, werden Datensätze soweit vorhanden abgerufen.

Beim erfindungsgemäßen Verfahren wird nach dem Aufbau einer Verbindung zwischen einem Endgerät und dem automatisch arbeitenden Dialogsystem das an der Verbindung beteiligte Endgerät bzw. die das beteiligte Endgerät enthaltende Gruppe ermittelt. Dabei werden bevorzugt Verfahren eingesetzt, die das Telekommunikationsnetz zur Verfügung stellt. Beispielsweise steht bei einem ISDN-Anschluß (Integrated Services Digital Network) die Nummer des anrufenden Endgerätes bereits vor dem vollständigen Verbindungsaufbau als Kennzeichen zur Verfügung. Bei einem Telekommunikationsnetz, in dem Datenpakete übertragen werden, enthält jedes Datenpaket die Adresse des sendenden Endgerätes und die des Empfängers.

Für das so ermittelte Endgerät bzw. die ermittelte Gruppe wird die Datenbank durchsucht. Ein bei der Suche ermittelter Datensatz wird dann zur Anpassung des Dialogsystems an den Benutzerzustand genutzt.

Durch diese Vorgehensweise wird erreicht, daß nach einiger Zeit für den Großteil der das Dialogsystem nutzenden Endgeräte Datensätze vorhanden sind. Mit Hilfe dieser Datensätze läßt sich die Anpassung an den Benutzer insbesondere in den ersten Sekunden des Dialogs im Vergleich zu herkömmlichen Verfahren erheblich erhöhen. Während bekannte Verfahren in den ersten Sekunden ohne Anpassung arbeiten, wird beim erfindungsgemäßen Verfahren das Dialogsystem noch vor Beginn des Dialogs oder bereits in den ersten Sekunden des Dialogs angepaßt. Werden die Datensätze nach jedem Anruf aktualisiert und erweitert, so wird die Anpassung weiter gesteigert.

Gruppen von Endgeräten lassen sich beispielsweise aufgrund der Vorwahl oder durch Sprachvergleich zwischen verschiedenen Endgeräten bilden. Beispielsweise wird das Dialogsystem möglicherweise von einer Person von mehreren Endgeräten aus genutzt, z.B. von einem Endgerät im Büro, von einem Endgerät zu Hause und von einem Mobilfunktelefon aus.

Das erfindungsgemäße Verfahren wird sowohl bei Dialogsystemen mit einer menüartigen Dialogstruktur, die auf die Erkennung einzelner Wörter gerichtet ist, aber auch bei komplexen Dialogsystemen verwendet, die in der Lage sind, vollständige Sätze zu verstehen und in geeigneter Weise zu reagieren. Dialogsysteme, bei denen das erfindungsgemäße Verfahren erfolgreich eingesetzt wird, sind beispielsweise ein Dialogsystem für Auskünfte, z.B. über einen Fahrplan oder über Veranstaltungen, und ein Dialogsystem für das Telefonbanking.

Bei einer anderen Weiterbildung werden für ein Endgerät mehrere Datensätze für verschiedene dieses Endgerät nutzende Teilnehmer angelegt. An Hand der zu Beginn des Dialogs übertragenen Sprachsignale wird dann ein Datensatz ausgewählt. Auch hier werden die bekannten Verfahren zur Sprecheridentifikation eingesetzt, um den richtigen Datensatz auszuwählen. Aufgrund der geringen Anzahl von Personen, die üblicherweise ein Endgerät benutzen, z.B. die Familienmitglieder, lassen sich sehr einfache Identifikationsverfahren einsetzen, die beispielsweise nur nach Geschlecht und Alter des Sprechers unterscheiden. Ohne großen Aufwand ist so eine Zuordnung der Datensätze zu einem Elternteil bzw. zu einem Kind der Familie möglich.

Bei einem zweiten Aspekt des erfindungsgemäßen Verfahrens wird eine geographische Position des Endgerätes ermittelt und zur Initialisierung des späteren Dialogs verwendet. Es wird ein Kennzeichen erfaßt, unter dem das Endgerät im Telekommunikationsnetz erreichbar ist. Beispielsweise wird im Telefonnetz die Rufnummer und im Internet die Internetadresse des Endgerätes genutzt. In dieser bevorzugten Ausführungsform der Erfindung können ferner als Kennzeichen die Rufnummer des Anrufers oder Teile der Rufhummer z.B. die Vorwahl berücksichtigt werden, um Äusserungen des Dialogsystems und Auswahlmöglichkeiten davon abhängig zu machen, aus welchem Gebiet der Benutzer anruft. Handelt es sich um einen Mobilfunkteilnehmer, so kann der Netzbetreiber die Position des Anrufers bzw. eine Information über die Zelle, in der sich der Benutzer befindet, über Telefonleitung bzw. per Mobilfunk weitergeben. Daraus oder aus dem Kennzeichen werden regionenspezifische Information gewonnen, die ebenfalls in den Dialogablauf integriert werden.

Die Verbindung wird sodann hergestellt und der Dialog gemäß Initialisierung eingeleitet. Die Initialisierung bedeutet die Einrichtung besserer Auswahlmöglichkeiten im interaktiven Dialog, die Auswahl passender Formulierungen des Systems oder die Vorbelegung von Dialogparametern.

In dieser Ausführung der Erfindung wird gegenüber herkömmlichen Dialogsystemen eine Verkürzung der Dialoge und eine benutzerfreundlichere Gestaltung des Dialoges durch Anpassung an die spezifischen Bedürfnisse des Anrufers möglich, indem von Beginn des Dialoges an Informationen über den Aufenthaltsort des Benutzers bei der Gestaltung des Dialogablaufs berücksichtigt werden.

Bei einer Ausgestaltung ist der für die Ermittlung der Gruppe genutzte Teil des Kennzeichens für Endgeräte verschiedener Anschlußart an das Telekommunikationsnetz verschieden. Rufnummern von Mobilfunktelefonen beginnen in Deutschland beispielsweise abhängig vom jeweiligen Netz mit den Nummern 0170, 0171, 0173 usw. und lassen sich so eindeutig von Telefonen im Festnetz unterscheiden. Abhängig von der Art werden bei der Ausgestaltung in der Spracherkennungseinheit verschiedene Verfahren zur Spracherkennung und/oder verschiedene Anpassungsverfahren für unterschiedliche Sprachqualitäten eingesetzt. Dieser Vorgehensweise liegt die Überlegung zugrunde, daß die Übertragungsqualität von der Anschlußart abhängt. Die Sprachqualität ist beispielsweise in Mobilfunknetzen geringer als in einem Festnetz. Durch die Auswertung des Kennzeichens kann auf aufwendige Verfahren zur Bestimmung der Übertragungsqualität verzichtet werden.

Ist der zur Ermittlung einer Gruppe genutzte Teil des Kennzeichens für Endgeräte verschiedener Gebiete verschieden, so wird bei einer nächsten Ausgestaltung eine Beschränkung der ursprünglichen Auswahlmöglichkeiten des Dialogsystems auf Auswahlmöglichkeiten vorgenommen, die das Gebiet betreffen, in dem das Endgerät liegt. Bereits vor dem ersten Anruf eines Teilnehmers werden so die Auswahlmöglichkeiten eingeschränkt. Bei Auskunftssystemen ist es oft so, daß die Personen, welche das Endgerät benutzen, nur Auskünfte über ihre unmittelbare Umgebung haben wollen, beispielsweise wenn sie eine Veranstaltung besuchen wollen oder den Ausgangspunkt einer Reise festlegen. In vielen Fällen wird die eingeschränkte Auswahlmöglichkeit vom Dialogpartner angenommen und so die Bedienung des Systems erleichtert, weil die Auswahl automatisch und nicht aufgrund der Angaben der Bedienperson erfolgt. Wird die beschränkte Auswahlmöglichkeit in Ausnahmefällen nicht angenommen, so werden in einem nächsten Verfahrensschritt wieder alle Auswahlmöglichkeiten der betreffenden Stufe zur Verfügung gestellt. Schlägt das Dialogsystem mindestens eine der beschränkten Auswahlmöglichkeiten von selbst vor, so kann die Bedienperson durch eine einfache JA- bzw. NEIN-Antwort den Vorschlag annehmen oder ablehnen.

Die Datensätze für die Endgeräte enthalten sowohl Sprachdaten bzw. Parameter zur Anpassung der Spracherkennungseinheit als auch Angaben über die zu erwartende bzw. frühere Nutzung des Dialogsystems. Mit Hilfe eines einzigen Datenbanksystems läßt sich so die Funktion des Dialogsystems mit vergleichsweise geringem Aufwand hinsichtlich der Anpassung an die Bedürfnisse des Benutzers als auch hinsichtlich der Bedienerfreundlichkeit verbessern.

Der erste und zweite Aspekt der Erfindung lassen sich dahingehend kombinieren, daß vom Dialogsystem sowohl ein vorausgehend gespeicherter Datensatz als auch ein Kennzeichen zur Ermittlung der geographischen Positionierung des Anrufers verwendet werden. Die Erfindung umfaßt demnach sowohl einzeln als auch in Kombination die Auswertung eines Datensatzes zum Endgerät, die Erfassung einer Vorwahl der Rufnummer des Endgerätes, die Ermittlung der Position eines Mobilfunkgerätes.

Die Erfindung betrifft außerdem ein Dialogsystem, das eine Schnittstelle zu einem Telekommunikationsnetz, eine Speichereinheit zum Speichern von Daten und mindestens eine Steuereinheit enthält. Die Steuereinheit ist so aufgebaut, daß das Dialogsystem nach einem Verfahren gemäß einem der oben genannten Erfindungsaspekte bzw. gemäß deren Weiterbildungen arbeitet.

Weiterhin gehören ein Computerprogramm zur Ausführung eines erfindungsgemäßen Verfahrens bzw. von dessen Weiterbildungen sowie ein Datenträger zur Speicherung des Computerprogramms bzw. ein Computerprogrammprodukt zur Erfindung, z.B. eine CD (Compact Disk) oder ein Speicherschaltkreis.

Im folgenden werden Ausführungsbeispiele der Erfindung an Hand der beiliegenden Zeichnungen erläutert. Darin zeigen:
- Figur 1: ein telefonisch erreichbares Dialogsystem,
- Figur 2: ein schematisches Verfahrensflußdiagramm, das bei der Annahme eines Anrufs im Dialogsystem ausgeführt werden,
- Figur 3: ein alternatives Verfahrensflußdiagramm bei Vorwahlermittlung, und
- Figur 4: ein weiteres Verfahrensflußdiagramm bei Mobilfunk-Standortbestimmung.

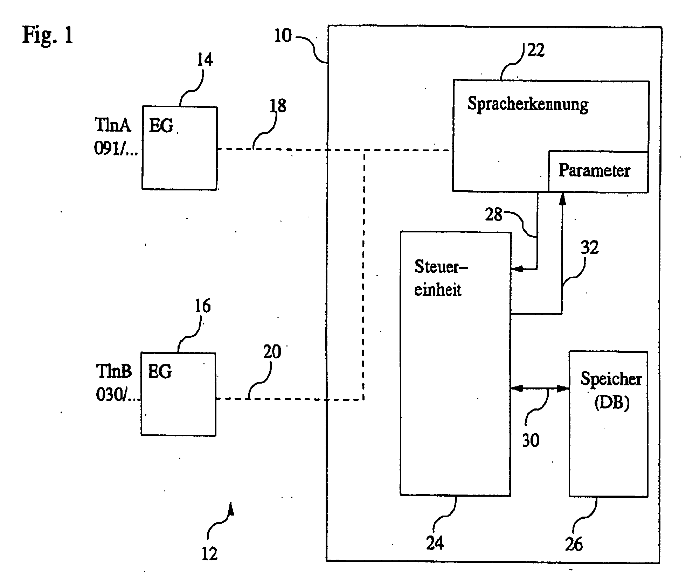

Figur 1 zeigt ein telefonisch erreichbares Dialogsystem 10, das über ein Telekommunikationsnetz 12 von Endgeräten 14 und 16 aus erreichbar ist. Das Telekommunikationsnetz 12 ist beispielsweise das Telekommunikationsnetz der Deutschen Telekom AG. Die Endgeräte 14 und 16 sind ISDN-Telefone (Integrated Services Digital Network). Das Endgerät 14 wird von einem Teilnehmer TlnA genutzt, der im Raum Nürnberg wohnt. Deshalb ist das Endgerät 14 über die Vorwahl 0911 im Telekommunikationsnetz 12 erreichbar. Das Endgerät 16 wird von einem Teilnehmer TlnB genutzt, der im Raum Berlin wohnt. Die Vorwahl des Endgerätes 16 ist die Ziffernfolge 030. Wird die Nummer des Dialogsystems 10 vom Teilnehmer TlnA gewählt, so wird zwischen Endgerät 14 und Dialogsystem 10 eine Sprachverbindung im Telekommunikationsnetz 12 aufgebaut bzw. geschaltet. Wird das Dialogsystem 10 durch den Teilnehmer TlnB genutzt, so wird eine Verbindung 20 zwischen dem Endgerät 16 und dem Dialogsystem 10 aufgebaut bzw. geschaltet.

Das Dialogsystem 10 ist eine Weiterentwicklung des bekannten Dialogsystems "FränKi - Das Fränkische Kinoinformationssystem". Im Dialogsystem 10 sind eine Spracherkennungseinheit 22, eine Steuereinheit 24 und eine Speichereinheit 26 enthalten. Die Spracherkennungseinheit 22 dient zum Erkennen der Sprache von Dialogpartnern, z.B. der Sprache des Teilnehmers TlnA bzw. TlnB. Die Spracherkennungseinheit 22 ist über eine nicht dargestellte Schnittstelle mit den Sprachverbindungen 18 und 20 verknüpft. In der Spracherkennungseinheit 22 werden die empfangenen Sprachsignale mit aus der Spracherkennung bekannten Verfahren bearbeitet. Dabei werden die bereits als digitale Daten vorliegenden Sprachsignale zu phonemischen Einheiten von beispielsweise 10 ms zusammengefaßt. Aus diesen Einheiten werden vorgegebene Merkmale extrahiert, beispielsweise das Vorhandensein bestimmter Frequenzen. Anschließend werden die so gewonnenen Merkmale mit den Merkmalen eines Laut- und Wortmodells verglichen. Die Spracherkennungseinheit erzeugt an ihrem Ausgang Daten, in denen die erkannten Worte codiert sind. Die Funktionen der Spracherkennungseinheit 22 werden beim Ausführen eines in einem Speicher des Dialogsystems 10 gespeicherten Programms durch einen Prozessor des Dialogsystems 10 erbracht.

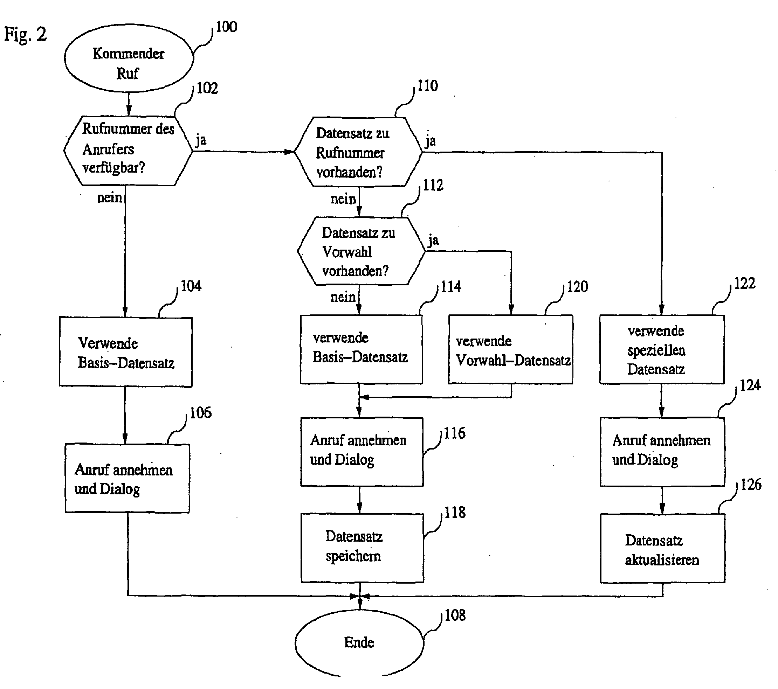

Die von der Spracherkennungseinheit 22 erkannten Worte werden über einen internen Meldungskanal 28 an die Steuereinheit 24 übermittelt und dort zur Steuerung des Dialogs eingesetzt. Die Steuereinheit 24 ist außerdem in der Lage, die Rufnummern der am Dialog beteiligten Endgeräte 14 bzw. 16 zu lesen und auszuwerten. Die dabei durchgeführten Verfahrensschritte werden unten an Hand der Figur 2 näher erläutert. Hat die Steuereinheit 24 eine Rufhummer bzw. die Vorwahl einer Rufnummer ermittelt, so greift sie über ein Bussystem 30 auf die Speichereinheit 26 zu, um einen Datensatz zu der Rufnummer bzw. zu der Vorwahl zu finden. Wird ein Datensatz ermittelt, so werden die darin enthaltenen Daten zur Dialogsteuerung und/oder zur Einstellung von Parametern des Spracherkennungssystems 22 genutzt, vgl. Pfeil 32.

Die Steuereinheit 24 beeinflußt den Dialog durch die Ansteuerung einer nicht dargestellten Sprachausgabeeinheit, die automatisch Sprachsignale erzeugt. Diese synthetischen Sprachsignale werden über die Sprachverbindung 18 bzw. 20 zum Teilnehmer TlnA bzw. TlnB weitergeleitet. Die Funktionen der Steuereinheit 24 werden beim Ausführen der Befehle eines im Speicher des Dialogsystems 10 gespeicherten Programms durch einen Prozessor erbracht.

Figur 2 zeigt Verfahrensschritte, die bei der Annahme eines Anrufes im Dialogsystem 10 ausgeführt werden. Deshalb wird beim Erläutern der Verfahrensschritte auch auf die Figur 1 Bezug genommen. Das Verfahren beginnt in einem Verfahrensschritt 100 mit der Anwahl des Dialogsystems 10 durch einen Teilnehmer, z.B. den Teilnehmer TlnA bzw. den Teilnehmer TlnB.

In einem folgenden Verfahrensschritt 102 wird durch die Steuereinheit 24 überprüft, ob die Rufnummer des vom Anrufer genutzten Endgerätes verfügbar ist. Dazu wird der ISDN-Dienst CLIP (Caller Line Identification Protocol) genutzt, mit dessen Hilfe die Rufnummer des rufenden Endgerätes an das gerufene Endgerät übertragen wird. Ist die Rufnummer des rufenden Endgerätes nicht verfügbar, weil beispielsweise der rufende Teilnehmer den ISDN-Dienst CLIR (Caller Line Identification Repression) zur Unterdrückung der Anzeige der Rufnummer auf der Gegenseite nutzt, so folgt unmittelbar nach dem Verfahrensschritt 102 ein Verfahrensschritt 104. Im Verfahrensschritt 104 liest die Steuereinheit 24 aus dem Speicher 26 einen Basis-Datensatz, der Standardparameter für die Einstellung der Spracherkennungseinheit 22 enthält. Diese Parameter werden zur Spracherkennungseinheit 22 übermittelt und zur Spracherkennung genutzt. In einem Verfahrensschritt 106 wird der kommende Anruf durch das Dialogsystem 10 entgegengenommen und ein vorgegebener Dialog ausgeführt. Zum Schluß des Dialogs wird das Verfahren in einem Verfahrensschritt 108 beendet. Da die Rufnummer des Anrufers nicht verfügbar ist, läßt sich auch kein neuer Datensatz im Speicher 26 speichern.

Wird dagegen im Verfahrensschritt 102 festgestellt, daß die Rufnummer des anrufenden Endgerätes verfügbar ist, so folgt unmittelbar nach dem Verfahrensschritt 102 ein Verfahrensschritt 110. Im Verfahrensschritt 110 prüft die Steuereinheit 24, ob im Speicher 26 ein Datensatz zu der Rufnummer des anrufenden Endgerätes vorhanden ist. Ist kein Datensatz zu dieser Rufnummer vorhanden, so folgt unmittelbar nach dem Verfahrensschritt 110 ein Verfahrensschritt 112.

Im Verfahrensschritt 112 wird durch die Steuereinheit 24 die Vorwahl aus der Rufnummer abgetrennt. Anschließend wird geprüft, ob im Speicher 26 ein Datensatz zu der Vorwahl vorhanden ist. Ist dies nicht der Fall, so folgt unmittelbar nach dem Verfahrensschritt 112 ein Verfahrensschritt 114, in welchem die Steuereinheit den Basis-Datensatz aus dem Speicher 26 liest und die darin gespeicherten Parameter an die Spracherkennungseinheit 22 übermittelt. Anschließend wird in einem Verfahrensschritt 116 der Anruf entgegengenommen und der Dialog ausgeführt. Dabei werden die Parameter des Basis-Datensatzes in der Spracherkennungseinheit verwendet.

Ist der Dialog zwischen dem rufenden Teilnehmer und dem Dialogsystem 10 beendet, so wird durch die Steuereinheit 24 in einem Verfahrensschritt 118 automatisch ein Datensatz zu der Rufnummer des Endgerätes erzeugt und im Speicher 26 gespeichert. Der Datensatz enthält dabei Parameter, die aus den während des Dialogs übertragenen Sprachdaten des Teilnehmers erzeugt worden sind. Die Parameter sind zur Anpassung der Speichererkennungseinheit an den rufenden Teilnehmer und an die Übertragungseigenschaften des Übertragungskanals zwischen dem rufenden Endgerät und dem Dialogsystem 10 geeignet.

Nach dem Verfahrensschritt 118 wird das Verfahren mit dem bereits erwähnten Verfahrensschritt 108 beendet.

Wird dagegen im Verfahrensschritt 112 festgestellt, daß ein Datensatz zu der Vorwahl des rufenden Endgerätes vorhanden ist, so folgt unmittelbar nach dem Verfahrensschritt 112 ein Verfahrensschritt 120. Im Verfahrensschritt 120 liest die Steuereinheit 24 einen zu der Vorwahl gehörenden Datensatz. Der Datensatz enthält Parameter, die an die Spracherkennungseinheit 22 übermittelt werden und in denen Eigenheiten des Dialekts enthalten sind, der in dem Gebiet gesprochen wird, in dem sich das rufende Endgerät befindet. Nach dem Verfahrensschritt 120 wird das Verfahren mit den Verfahrensschritten 116 und 118 fortgesetzt. Während des Dialogs werden in der Spracherkennungseinheit 22 die an den Dialekt angepaßten Parameter eingesetzt, um die Erkennungsrate zu erhöhen. Am Ende des Dialogs wird wiederum zu der Rufnummer ein Datensatz im Speicher 26 gespeichert, der Parameter enthält, mit denen das Spracherkennungssystem 22 an die Stimme des Teilnehmers und die Übertragungseigenschaften des Übertragungskanals angepaßt worden ist.

Wird im Verfahrensschritt 110 festgestellt, daß ein Datensatz zu der Rufnummer des rufenden Endgerätes vorhanden ist, so folgt unmittelbar nach dem Verfahrensschritt 110 ein Verfahrensschritt 122. Im Verfahrensschritt 122 liest die Steuereinheit 24 aus dem Speicher 26 den zur Rufnummer gehörenden speziellen Datensatz. Die in dem speziellen Datensatz enthaltenen Parameter sind bei einem früheren Anruf von dem gleichen Endgerät erzeugt worden. Die Parameter werden an die Spracherkennungseinheit 22 übermittelt und dort bereits vor Beginn des Dialogs zur Anpassung der Spracherkennungseinheit 22 an die Eigenheiten des rufenden Teilnehmers verwendet.

In einem folgenden Verfahrensschritt 124 wird der Anruf entgegengenommen und der Dialog durchgeführt. Die Erkennungsrate der Spracherkennungseinheit 22 ist auch zu Beginn des Dialogs sehr hoch, weil die Spracherkennungseinheit bereits an die Stimme des Teilnehmers und die Übertragungseigenschaften des Kanals angepaßt ist. Ist der Dialog beendet, so wird in einem Verfahrensschritt 126 ein Datensatz zu der Rufnummer des rufenden Endgerätes im Speicher 26 gespeichert, der Parameter enthält, die aufgrund der während der letzten Verbindung gewonnenen Sprachdaten aktualisiert worden sind. Anschließend wird das Verfahren im Verfahrensschritt 108 beendet.

Bei einem anderen Ausführungsbeispiel enthalten die im Speicher 26 gespeicherten Datensätze außerdem Angaben über die Art der Nutzung des Dialogsystems 10 bei früheren Anrufen. An Hand dieser Angaben beeinflußt die Steuereinheit 24 die Dialogführung in den Verfahrensschritten 106, 116 und 124. Am Ende des Dialogs werden bei verfügbarer Rufnummer in dem im Verfahrensschritt 118 bzw. Verfahrensschritt 126 gespeicherten Datensatz auch Angaben über den letzten Dialog gespeichert.

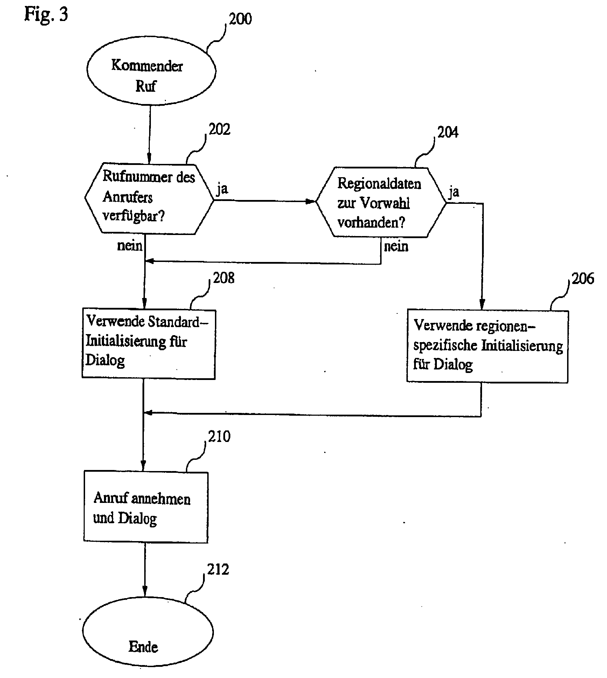

In Fig. 3 ist ein Verfahrensablaufdiagramm gezeigt, das bei der Vorwahlberücksichtigung bevorzugt zum Einsatz kommt.
Ein eingehender Anruf in Schritt 200, bsp. mit einer ISDN-Nummer, wird in Schritt 202 auf Verfügbarkeit der Rufnummer, insbesondere Vorwahlnummer geprüft. Wenn die Rufnummer verfügbar ist, kann die Vorwahlnummer extrahiert werden. In diesem Fall (Ja-Zweig) wird sodann in Schritt 204 geprüft, ob Regionaldaten zu dieser Vorwahlnummer verfügbar sind. Falls dies bejaht wird, wird in Schritt 206 eine regionalspezifische Initialisierung des Dialogs vorgenommen. Sodann wird in Schritt 210 der Anruf angenommen und der Dialog eingeleitet. In Schritt 212 wird schließlich der Dialog beendet.

Falls dagegen in Schritt 202 ermittelt wird, daß die Vorwahlnummer nicht verfügbar ist, wird in Schritt 208 eine Standard-Initialisierung für den Dialog vorgenommen. Der Anruf wird sodann angenommen und vgl. oben der Dialog begonnen.

Sollten in Schritt 204 keine Regionaldaten verfügbar sein, wird ebenfalls, wie oben, in Schritt 208 eine Standard-Initialisierung vorgenommen.

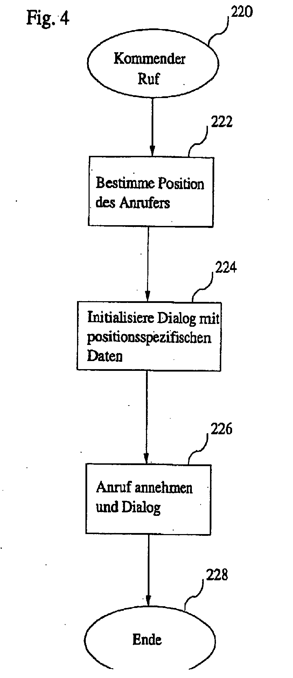

In Fig. 4 wird eine mit dem Mobilfunkbetreiber abgestimmte Positionsbestimmung des Anrufers aus einem Mobilfunknetz vorgenommen.
Der in Schritt 220 eingehende Anruf wird in Schritt 222 durch Auswerten von Informationen über die Zelle bzw. Basisstation des Rufs einer Positionsbestimmung des Anrufers unterzogen. Sodann wird in Schritt 224 mit positionsspezifischen Daten der Dialog initialisiert und in Schritt 226 der Anruf angenommen und der Dialog eingeleitet. Der Dialog wird in Schritt 228 beendet.

Beispiel für einen Dialog mit dem Kinoinformationssystem:-
1. Benutzer wollte beim letzten Anruf in Hamburg ins Kino.
   Diese Information wurde in einem Datensatz gespeichert.
   Dialogsystem fragt statt "Wo wollen Sie ins Kino gehen?" : "Wollen Sie in Hamburg ins Kino gehen ?"
2. Ein unbekannter Anrufer ruft mit Fürther Vorwahl an.
   Dialogsystem fragt statt "Wo wollen Sie ins Kino gehen?" : "Wollen Sie in Fuerth, Erlangen oder Nuernberg ins Kino gehen ?"
3. Ein Mobilfunkkunde ruft aus Schwabing an und will in's Kino gehen.
   Dialogsystem fragt: "Moechten Sie in Schwabing ins Kino gehen ?"

### Bezugszeichenliste

- 10: Dialogsystem
- 12: Telekommunikationsnetz
- 14, 16: Endgerät
- TlnA, TlnB: Teilnehmer
- 18,20: Sprachverbindung
- 22: Spracherkennungseinheit
- 24: Steuereinheit
- 26: Speichereinheit
- 28: Interner Meldungskanal
- 30: Bussystem
- 32: Pfeil
- 100: Kommender Ruf
- 102: Rufnummer des Anrufers verfügbar?
- 104: Verwende Basis-Datensatz
- 106: Anruf annehmen und Dialog
- 110: Datensatz zu Rufnummer vorhanden?
- 112: Datensatz zu Vorwahl vorhanden?
- 114: Verwende Basis-Datensatz
- 116: Anruf annehmen und Dialog
- 118: Datensatz speichern
- 120: Verwende Vorwahl-Datensatz
- 122: Verwende speziellen Datensatz
- 124: Anruf annehmen und Dialog
- 126: Datensatz aktualisieren

## Patentansprüche

1. Verfahren zum Steuern eines Dialogsystems (10),
bei dem für verschiedene Endgeräte (14, 16) bzw. Gruppen von Endgeräten eines Telekommunikationsnetzes (12) jeweils mindestens ein Datensatz gespeichert wird, der mindestens eine Angabe über eine frühere Nutzung des Dialogsystems (10) enthält,
eine Verbindung zwischen dem Endgerät (14, 16) und dem Dialogsystem (10) aufgebaut wird,
das an der Verbindung beteiligte Endgerät (14, 16) bzw. die das beteiligte Endgerät enthaltende Gruppe ermittelt wird,
und der für das ermittelte Endgerät (14) bzw. für die ermittelte Gruppe gespeicherte Datensatz zur Steuerung des Dialogs zwischen einem das Endgerät (14) nutzenden Teilnehmer (TlnA, TlnB) und dem Dialogsystem (10) genutzt wird.

2. Verfahren zum Steuern eines Dialogsystems (10),
bei dem eine geographische Position eines Endgerätes (14,16) erfaßt und zur Initialisierung eines Dialogs verwendet wird,
eine Verbindung zwischen dem Endgerät (14, 16) und dem Dialogsystem (10) aufgebaut wird, und
der Dialog zwischen dem Endgerät (14,16) und dem Dialogsystem (10) gemäß Initialisierung gestartet wird.

3. Verfahren gemäß Anspruch 2, wobei die geographische Position des Endgerätes (14,16) gespeichert wird.

4. Verfahren gemäß Anspruch 2 oder 3, wobei die geographische Position aus der Vorwahl der Rufnummer des Endgerätes (14,16) und/oder aus der geographischen Lokalisierung eines mobilen Endgerätes und/oder aus einem vorausgehend zu dem Endgerät (14,16) gespeicherten Datensatz gewonnen wird.

5. Verfahren nach einem der vorstehenden Ansprüche, **dadurch gekennzeichnet, daß** der ein Endgerät (14) betreffende Datensatz Sprachdaten und/oder Positionsdaten mindestens einer früheren Verbindung zwischen dem Endgerät (14) und dem Dialogsystem (10) enthält.

6. Verfahren nach einem der vorstehenden Ansprüche, **dadurch gekennzeichnet, daß** für ein Endgerät (14) mehrere Datensätze für verschiedene dieses Endgerät (14) nutzende Teilnehmer angelegt werden,
und daß abhängig von am Beginn des Dialogs übertragenen Sprachsignalen ein betreffender Datensatz ausgewählt wird.

7. Verfahren nach einem der vorhergehenden Ansprüche, **dadurch gekennzeichnet, daß** zur Ermittlung des Endgerätes (14) bzw. der das Endgerät enthaltenden Gruppe ein Kennzeichen verwendet wird, unter dem das Endgerät (14) im Telekommunikationsnetz (12) erreichbar ist.

8. Verfahren nach einem der vorstehenden Ansprüche, **dadurch gekennzeichnet, daß** ein Teil des Kennzeichens für Endgeräte (14, 16) in verschiedenen geographischen Gebieten unterschiedlich ist,
und daß die zu erwartenden Sprachdaten für das geographische Gebiet typische Sprachdaten sind, insbesondere für eine Sprache oder einen Dialekt typische Sprachdaten.

9. Verfahren nach einem der vorstehenden Ansprüche, **dadurch gekennzeichnet, daß** ein Teil des Kennzeichens für Endgeräte (14) verschiedener Anschlußart an das Telekommunikationsnetz (12) verschieden ist,
und daß abhängig von der Anschlußart in einer zugeordneten Spracherkennungseinheit (22) verschiedene Verfahren zur Spracherkennung und/oder zur Anpassung für unterschiedliche Sprachqualitäten eingesetzt werden.

10. Verfahren nach einem der vorstehenden Ansprüche, **dadurch gekennzeichnet, daß** das Dialogsystem (10) abhängig von den Angaben so gesteuert wird, daß es eine Auswahlmöglichkeit von selbst vorschlägt, die von dem Endgerät (14) aus bereits früher ausgewählt worden ist.

11. Verfahren nach einem der vorstehenden Ansprüche, **dadurch gekennzeichnet, daß** Auswahlmöglichkeiten, wie im Datensatz festgelegt, auf Auswahlmöglichkeiten beschränkt sind, die dieses geographische Gebiet betreffen.

12. Verfahren nach Anspruch 12, **dadurch gekennzeichnet, daß** das Dialogsystem (10) mindestens eine der beschränkten Auswahlmöglichkeiten von selbst vorschlägt.

13. Verfahren nach einem der vorhergehenden Ansprüche, **dadurch gekennzeichnet, daß** das Dialogsystem eine Spracherkennungseinheit (22) enthält, mit der von einem Endgerät (14, 16) kommende Sprachsignale ausgewertet werden.

14. Dialogsystem (10),
mit mindestens einer Schnittstelle zu einem Telekommunikationsnetz (12),
mit einer Speichereinheit (26) zum Speichern von Datensätzen,
mit einer Steuereinheit (24),
**dadurch gekennzeichnet, daß** die Steuereinheit (24) das Dialogsystem (10) nach einem Verfahren gemäß einem der Ansprüche 1 bis 13 steuert.

15. Computerprogramm, **dadurch gekennzeichnet, daß** beim Ausführen seiner Befehle durch einen Prozessor ein Verfahren gemäß einem der Ansprüche 1 bis 13 ausgeführt wird.

16. Computerprogrammprodukt mit Programmcode-Mitteln, die auf einem computerlesbaren Datenträger gespeichert sind, um das Verfahren nach einem beliebigen Anspruch 1-13 durchzuführen, wenn das Programmprodukt auf einem Computer ausgeführt wird.
